# FASCICULE DE BREVET EUROPEEN

(11) **EP 1 419 429 B1**
(45) Date de publication et mention de la délivrance du brevet: **01.12.2004**
(21) Numéro de dépôt: 02790208.9
(22) Date de dépôt: 22.07.2002
(51) Int. Cl.: G06F 1/00

(54) **PROTECTION DE DONNEES PERSONNELLES LUES DANS UNE STATION TERMINALE PAR UN SERVEUR**
VERFAHREN ZUM SCHUTZ PERSÖNLICHER DATEN, DIE IN EINER ENDSTATION DURCH EINEN SERVER GELESEN WERDEN
METHOD FOR PROTECTING PERSONAL DATA READ IN A TERMINAL STATION BY A SERVER

(30) Priorité: 25.07.2001 FR 0109969
(43) Date de publication de la demande: 19.05.2004
(73) Titulaire: GEMPLUS, 13420 Gémenos (FR)
(72) Inventeur: GIRAUD, Jean-Luc, F-Aubagne 13400 (FR); GIRARD, Pierre, 13112 la Destrousse (FR)
(86) Numéro de dépôt international: PCT/FR2002/002614
(87) Numéro de publication internationale: WO 2003/010639

(56) Documents cités:
- WO-A-01/50400
- US-B1- 6 192 380
- MUFTIC S ET AL: "SECURITY ARCHITECTURE FOR DISTRIBUTED SYSTEMS" COMPUTER COMMUNICATIONS, ELSEVIER SCIENCE PUBLISHERS BV, AMSTERDAM, NL, vol. 17, no. 7, 1 juillet 1994 (1994-07-01), pages 492-500, XP000447007 ISSN: 0140-3664

## Description

La présente invention concerne de manière générale le traitement automatisé de données personnelles et plus particulièrement la protection de données personnelles lues dans une station terminale d'usager par un serveur notamment de site internet.

Afin de satisfaire les demandes de plus en plus pressantes des consommateurs pour protéger leurs données personnelles notamment d'identité et d'adresse dans les relations entre leurs stations terminales et des serveurs, des politiques privées gérées par les usagers sont prévues dans les stations terminales.

Après l'établissement d'une communication entre un serveur et une telle station terminale, le serveur communique des données de politique de serveur indiquant notamment à la station terminale les différentes utilisations des données personnelles de l'usager de la station terminale que le gestionnaire du serveur souhaite prélever dans la station terminale, notamment en vue de diffuser ces données personnelles vers d'autres sites ou acteurs économiques. Afin de filtrer ces utilisations, la station terminale compare les données de politique de serveur reçues avec les données de politique privée pré-mémorisées dans la station terminale de manière à ne transmettre des données personnelles demandées par le serveur que lorsque les politiques sont compatibles.

Cependant, la politique du serveur n'est qu'une déclaration et le gestionnaire du serveur n'est pas en mesure de justifier ultérieurement, lors d'un audit ou de l'exercice du droit d'opposition par l'usager, que l'usager a autorisé le gestionnaire du serveur à diffuser certaines données.

L'objectif de l'invention est de remédier à cet inconvénient afin que le gestionnaire du serveur puisse prouver ultérieurement toute autorisation de lecture de données personnelles dans la station terminale et ainsi tout consentement de l'usager de la station terminale à communiquer des données personnelles prédéterminées.

Les documents suivants sont considérés comme étant l'état de la technique le plus proche:
- WO0150400A divulgue un procédé visant à protéger les données personnelles lues dans une station terminale par un serveur membre. Ce procédé comprend la transmission de données de politique de serveur depuis un serveur central à la station, l'approbation ou la désapprobation de ces données de politique de serveur par l'usager de la station et la transmission de données d'approbation ou de désapprobation (contenant une référence aux données de politique de serveur) depuis la station vers le serveur central. Ces données d'approbation ou de désapprobation sont ensuite signées par le serveur central puis envoyées au serveur membre. Ce dernier peut ainsi, en cas d'approbation, accéder aux données personnelles de la station terminale.
- US-B1-6192380 divulgue un procédé permettant de remplir automatiquement les champs d'un formulaire électronique envoyé par un serveur à une station. Ce procédé comprend une étape de vérification des champs demandés par le formulaire électronique au cours de laquelle ces champs sont comparés à des règles de diffusion de données personnelles pré-mémorisées dans la station.

Afin de remédier à l'inconvénient décrit ci-dessus, un procédé de protection de données personnelles lues dans une station terminale d'usager par un serveur, comprenant une transmission de données de politique de serveur depuis le serveur à la station et une comparaison des données de politique de serveur à des données de politique privée pré-mémorisées dans la station, est caractérisé par une détermination d'une signature des données de politique de serveur reçues dans la station et une transmission de la signature avec des données personnelles lues dans la station depuis la station au serveur lorsque les données de politique de serveur sont compatibles avec les données de politique privée.

Grâce à la signature transmise au serveur qui est mémorisée par celui-ci, le gestionnaire du serveur est capable de certifier, à travers la politique privée pré-mémorisée dans la station terminale, que l'usager a autorisé la lecture de données personnelles prédéterminées en fonction de la politique de serveur.

En outre, si plusieurs politiques sont proposées ou ont été négociées, ou si la politique de serveur a été modifiée ultérieurement, le gestionnaire du serveur sera capable de prouver que ces politiques ont été acceptées par l'usager au cours de sessions successives.

Pour éviter encore une opposabilité de l'usager de la station terminale relativement aux données de politique de sécurité, le procédé peut en outre comprendre une transmission d'une signature des donnés de politique de serveur avec les données de politique de serveur depuis le serveur à la station terminale, et une mémorisation de cette signature par la station terminale, de préférence avec des données d'horodatage transmises par le serveur. Cette deuxième signature servira alors de preuve que l'usager a reçu une politique de serveur déterminée à un distant donné.

Afin de permettre une portabilité des données de politique privée et particulièrement des données personnelles pour la plupart nominatives, la station terminale comprend une unité centrale et une carte à puce en liaison avec l'unité centrale, et ayant pré-mémorisée lesdites données de politique privée et les données personnelles. De préférence, la carte à puce contient un algorithme pour signer les données de politique de serveur reçues.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de télécommunications à serveur et station terminale pour la mise en oeuvre du procédé de protection de données personnelles selon l'invention;
- la figure 2 est un algorithme du procédé de protection de données personnelles implémenté dans la station terminale ; et
- les figures 3 et 4 sont des blocs-diagrammes fonctionnels schématiques respectivement de deux variantes d'une deuxième réalisation de la station terminale dotée d'un lecteur pour carte à puce additionnelle.

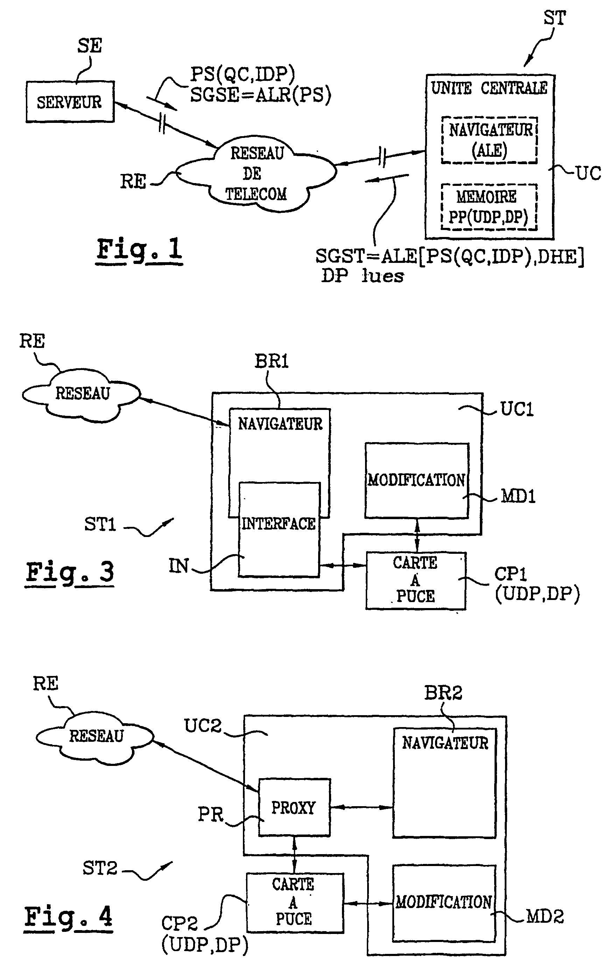

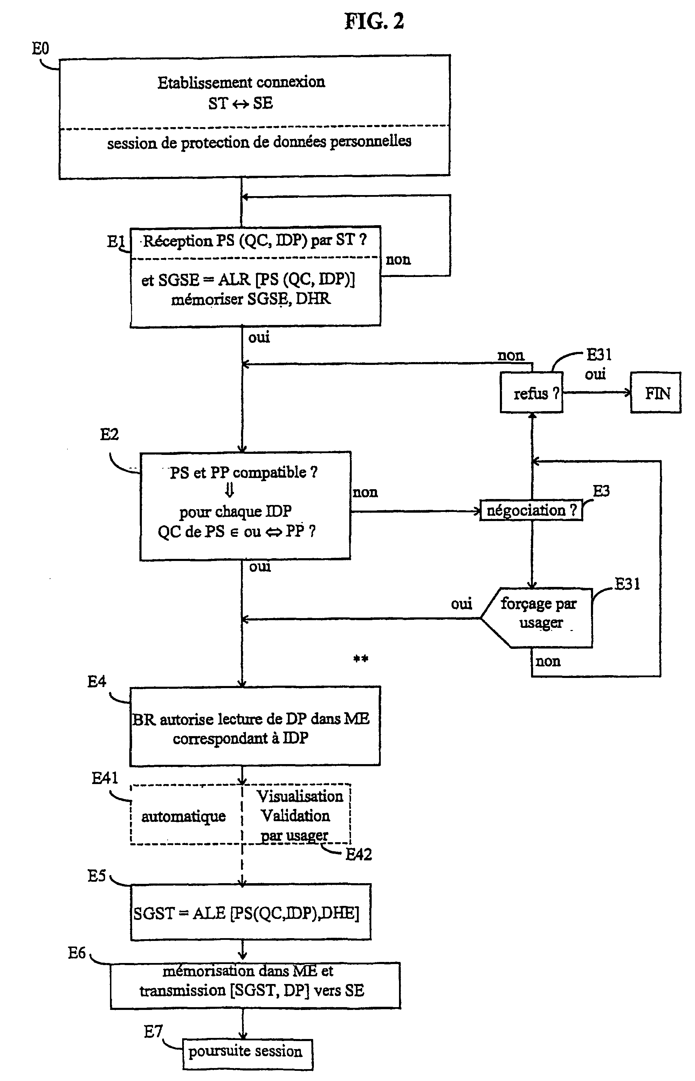

Dans la figure 1 sont représentés schématiquement un serveur SE constituant un site WEB et une station terminale d'usager ST reliée notamment à travers un réseau de télécommunications par paquets RE incluant le réseau internet.

Selon une première réalisation, la station terminale ST est un ordinateur personnel PC qui est schématisé dans la figure 1 par son unité centrale UC, des périphériques de celle-ci tels que clavier, écran, imprimante, modem, etc. n'étant pas représentés.

En variante, la station terminale ST repose sur une plate-forme pouvant comprendre un assistant numérique personnel (PDA) et/ou un terminal radiotéléphonique mobile ; pour cette dernière variante, le réseau RE englobe le réseau de radiotéléphonie cellulaire auquel est rattaché le terminal mobile.

Comme montré schématiquement à la figure 1, l'unité centrale UC de la station terminale ST comprend notamment en relation avec l'invention, une mémoire ME, telle que disque dur, ayant pré-mémorisée des données PP définissant une politique privée, ainsi que des données personnelles DP, et un navigateur BR ("Browser") jouant le rôle de client par rapport au serveur web SE et gérant l'interface graphique avec l'usager de la station terminale et des liens pour accéder à des documents, notamment des formulaires, transmis par le serveur.

Les données personnelles DP de l'usager de la station ST sont notamment nominatives et peuvent comprendre au moins l'une des données suivantes : l'identité de l'usager composée par son nom patronymique, au moins l'un de ses prénoms et éventuellement sa date de naissance ; la localisation de la station terminale qui peut être déterminée d'une manière automatique, notamment lorsque la station terminale est un terminal radiotéléphonique mobile ; une adresse de courrier électronique (e-mail) ; l'adresse de domicile et/ou l'adresse professionnelle de l'usager ; un numéro de téléphone ; une liste des derniers sites web visités, etc. Chacune des données personnelles DP mémorisées dans l'unité centrale UC est désignée par un idéntificateur IDP afin que les données personnelles puissent être lues sous la commande du serveur SE, comme on le verra ci-après.

Les données de politique privée PP définissent une gestion des données personnelles DP de l'usager de la station terminale ST relative à ses rapports avec l'extérieur de l'unité centrale, et particulièrement avec tout serveur web SE. En particulier, les données de politique privée PP comprennent une ou plusieurs utilisations UDP de chaque donnée personnelle DP que souhaite l'usager. Inversement, une donnée d'utilisation de donnée personnelle UDP peut être également associée à plusieurs données personnelles DP. Les données DP et UDP sont de préférence conformes au format standard P3P (Plateform for Privacy Protection), tout comme des données de politique PS qui sont produites par le serveur SE et transmises au navigateur BR dans la station ST. Tous les documents et données au format P3P sont écrits en langage XML (eXtended Markup Language), ou en variante en langage WML adaptant le langage XML à la norme d'affichage WAP (Wireless Access Protocol) lorsque la station terminale est un terminal radiotéléphonique mobile.

Les données UDP représentent des règles privées élaborées par l'usager de la station terminale de manière à autoriser la lecture de certaines données personnelles DP dans la mémoire ME par le serveur SE. Les règles privées sont programmées par l'usager dans le navigateur BR et peuvent dépendre notamment :
- de l'usage ultérieur par le gestionnaire du serveur SE des données personnelles DP communiquées par la station terminale ST au serveur SE, par exemple pour des traitements automatisés ayant pour fin du marketing direct, des statistiques, de la revente, etc. ;
- de la localisation de la station terminale qui peut être au domicile ou au bureau de l'usager, ou qui peut participer à une téléconférence ; par exemple l'usager accepte de ne recevoir que des offres promotionnelles lorsque la station terminale est à son domicile ;
- du coût des prestations offertes par le serveur SE ; par exemple l'usager refuse de communiquer certaines données personnelles DP si les prestations sont supérieures à un montant prédéterminé, ou inversement le serveur refuse d'offrir certaines prestations si l'usager décide de payer celles-ci en espèce ;
- de données temporelles ; par exemple l'usager accepte de recevoir des courriers électroniques que pendant les heures de bureau ;
- d'adresses de site web pré-mémorisées URL (Universal Resource Locator) ; la station ST refuse toute communication de données personnelles à un serveur si l'adresse de celui-ci n'est pas contenue dans la liste d'adresses de site ;
- de la destination des données personnelles à communiquer ; par exemple l'usager refuse de communiquer les données personnelles lorsque le serveur SE souhaite les communiquer à des personnes physiques ou morales prédéterminées, ou bien vers des pays dont les états n'ont pas légiféré en matière d'informatique, de fichiers et de libertés, et particulièrement sur la protection des données personnelles.

Pour prélever certaines données personnelles DP de la mémoire ME dans la station terminale ST, le serveur SE contient des données de politique de serveur PS qui peuvent être reconnues par le navigateur BR et qui sont donc exprimées également selon le standard P3P en langage XML. En général, les données de politique PS transmises par le serveur SE à la station terminale ST sont sous la forme d'un formulaire qui comprend des questions et commentaires QC analogues à des données d'utilisation UDP et dont les réponses correspondent à des données personnelles DP identifiées par des identificateurs IDP. Ainsi un message transmis par le serveur SE contient un formulaire définissant une politique de serveur PS avec des données QC et des identificateurs correspondants IDP.

En se référant maintenant à la figure 2, le procédé de protection de données personnelles selon l'invention comprend principalement des étapes E1 à E7. Ces étapes principales succèdent à une étape initiale E0 au cours de laquelle est établie classiquement une connexion entre la station terminale ST et le serveur SE après sélection de l'adresse URL du serveur SE par l'usager afin d'ouvrir une session d'accès au serveur débutant par une session de protection de données personnelles. L'algorithme des étapes E1 à E8 est essentiellement implanté dans l'unité centrale UC de la station terminale ST, sous la forme par exemple d'une applet en langage JAVA téléchargeable et exécutée par le navigateur BR.

A l'étape E1, la station ST reçoit des données de politique de serveur PS comprenant notamment des identificateurs de données personnelles IDP et des données QC de politique de serveur PS par exemple sous la forme d'un formulaire P3P en langage XML. Puis à l'étape E2, le navigateur BR compare les données reçues QC, IDP définissant la politique de serveur PS aux données UDP de la politique privée PP qui sont lues dans la mémoire ME. La vérification de la compatibilité de la politique de serveur avec la politique privée revient sensiblement à contrôler que pour chaque identifiant de donnée personnelle IDP communiqué par le serveur SE, la ou les données correspondantes reçues QC appartiennent à, ou sont exprimées sous une forme équivalente dans la politique privée PP définie par l'usager et pré-mémorisée en mémoire ME dans la station terminale. Si les données de politique de serveur reçues sont compatibles avec les données de politique privée pré-mémorisées, le navigateur BR autorise la lecture des données personnelles DP dans la mémoire ME adressées par les identificateurs reçus IDP respectivement, à l'étape E4.

Par contre, s'il y a incompatibilité entre la politique de serveur PS et la politique privée PP, c'est-à-dire si la réponse à au moins l'une des données reçues QC est incompatible avec des données de politique privées UDP correspondant à un identificateur reçu IDP, le serveur SE propose une négociation à une étape E3 à la suite d'un refus temporaire transmis par la station terminale.

Par exemple, si le serveur SE a précisé dans des données QC qu'il souhaitait posséder l'adresse de courrier électronique de la station ST à des fins de marketing direct alors que l'usager refuse une telle communication, le serveur dialogue alors avec l'usager afin de trouver un compromis. Si l'usager est associé dans le serveur à des caractéristiques de bon client qui a généré un chiffre d'affaires supérieur à une limite prédéterminée pour des achats directement sur le site du serveur SE, le serveur SE accepte de continuer la session sans que la station terminale communique l'adresse de courrier électronique. Par contre pour tout nouveau client, le serveur refuse de continuer la session si l'adresse de courrier électronique de ce nouveau client n'est pas communiquée et l'algorithme passe alors de l'étape E3 à une étape E31 pour terminer la session.

En variante, si une négociation est envisagée à l'étape E3, le navigateur BR affiche une fenêtre sur l'écran de la station terminale ST afin de demander à l'usager s'il souhaite renoncer à la ou les interdictions de communication de données personnelles qui a généré la négociation. Ainsi à une étape E32, l'usager décide par exception de forcer automatiquement la lecture d'une ou de plusieurs données personnelles DP qui sont normalement interdites à communiquer au serveur pour la politique de serveur PS.

Après l'étape E2 en cas de compatibilité, ou après l'étape E31 en cas de forçage de lecture, le navigateur BR autorise la lecture des données personnelles DP correspondant respectivement aux identificateurs reçus IDP, à l'étape E4. De préférence, les données de politique de serveur reçues PS sont converties sous la forme d'un formulaire visualisé dans la station terminale ST et rempli automatiquement par les données personnelles lues DP.

Puis conformément à l'invention, le navigateur BR décide à l'étape E5 de signer les données de politique de serveur reçues PS(QC, IDP) selon un algorithme prédéterminé ALE, éventuellement y compris une clé prédéterminée, afin de produire une signature de données de politique de serveur SGST. Par exemple l'algorithme ALE résulte d'un hachage des données reçues dont le résultat est un condensé de taille inférieure aux données reçues et est ensuite chiffré par un algorithme de chiffrement asymétrique tel que l'algorithme de chiffrement RSA (Rivest Shamir Adleman) à clés publique et privée.

De préférence des données d'horodatage d'émission DHE, telles que la date et l'heure courantes, sont adjointes aux données de politique de serveur reçues afin qu'elles soient signées avec celles-ci en une signature SGST = ALE [PS(QC, IDP) et DHE].

En variante, au lieu d'un passage automatique E41 de la lecture de données personnelles DP à l'étape E4 à la signature à l'étape E5, une étape intermédiaire E42 est prévue entre les étapes E4 et E5 qui, au moyen d'une fenêtre de visualisation particulière affichant les données lues DP, invite l'usager à valider la signature des données lues DP et la transmission de celles-ci pour l'étape suivante E6.

Après l'étape E5, la station terminale ST transmet la signature des données de politique de serveur SGST et les données personnelles DP lues en mémoire ME à l'étape E4. De préférence, la mémoire ME de la station ST conserve les données transmises et particulièrement la signature SGST et les données d'horodatage DHE avec l'adresse du serveur. Puis la session avec le serveur SE est poursuivie à l'étape E7. Le serveur SE reçoit ainsi la signature SGST qu'il mémorise avec la date et l'heure de la réception de celle-ci en correspondance au moins avec l'adresse de la station terminale ST afin de justifier ultérieurement, en cas de besoin, que l'usager a autorisé la communication des données personnelles DP lues à l'instant indiqué par les données DHE à l'étape E4 et transmises à l'étape E6. Si l'usager a conservé en mémoire ME la signature SGST et les données transmises, elles seront comparées à celles reçues par le serveur, ce qui devrait mettre un terme à toute contestation.

Afin encore d'améliorer la preuve d'une communication de données personnelles à rapporter ultérieurement, les données de politique de serveur PS(QC, IDP) sont préalablement signées en une signature SGSE par le serveur SE et conservées par celui-ci avec des données d'horodatage courantes. La signature SGSE est transmise avec les données de politique PS par le serveur SE et est également reçue par la station terminale ST à l'étape E1. La signature SGSE et des données d'horodatage DHR relatives à la réception de la signature sont écrites dans la mémoire ME de la station ST. La signature SGSE apporte un moyen de présomption supplémentaire que l'usager a reçu les données de politique de serveur PS. De préférence, l'algorithme ALR implanté dans le serveur pour signer les données PS diffère de l'algorithme ALE.

Selon d'autres réalisations montrées aux figures 3 et 4, la station terminale ST1, ST2 comprend une unité centrale UC1, UC2, qui est dotée d'un lecteur pour carte à puce additionnelle CP1, CP2 dite également carte à microcontrôleur ou carte à circuit intégré. L'unité centrale UC1, UC2 peut être, entre autres, un terminal radiotéléphonique mobile, dans lequel la carte d'identité d'usager SIM (Subscriber Identity Module) est distincte de la carte à puce additionnelle CP1, CP2. La liaison entre la carte à puce CP1, CP2 et l'unité centrale UC1, UC2 est classique et peut être une liaison à contact électrique, ou une liaison dite sans contact, ou une liaison radioélectrique de proximité du type Bluetooth qui ne nécessite aucune contact physique entre l'unité centrale et la carte.

Selon la réalisation montrée à la figure 3, la carte à puce CP1 est en relation avec le navigateur BR1 par l'intermédiaire d'un module logiciel (plugin) IN faisant office d'interface afin que le microcontrôleur dans la carte à puce CP1 accède aux informations dans le navigateur BR1.

Selon la réalisation montrée à la figure 4, le navigateur BR2 ne peut accéder directement à un dialogue avec le serveur SE à travers le réseau RE. La station terminale ST2 comprend alors un module proxy PR intermédiaire entre le navigateur BR2, la carte à puce CP2 et le réseau RE afin que le proxy PR joue le rôle de serveur par rapport au navigateur BR2 et le rôle de client par rapport au serveur SE et puisse récupérer des données notamment personnelles DP dans la carte à puce CP2.

Pour les deux réalisations illustrées aux figures 3 et 4, trois variantes sont prévues.

De préférence, pour ces trois variantes, la carte à puce CP1, CP2 effectue elle-même la comparaison des données de politique de serveur PS à des données de politique privée PP pré-mémorisées dans la station selon l'étape E2.

Selon une première variante, seulement les données de politique privée PP (UDP, DP) sont pré-mémorisées dans la carte à puce CP1, CP2, à la place de la mémoire ME de l'unité centrale UC. Le navigateur BR1, BR2 possède l'algorithme de signature ALE.

Selon une deuxième variante, la carte à puce CP1, CP2 mémorise et gère toutes les données relatives à la politique privée PP. Dans cette variante, la mémoire non volatile de type EEPROM de la carte à puce a pré-mémorisé les données personnelles DP, les données d'utilisation de données personnelles UDP, ainsi que l'algorithme de signature ALE afin de déterminer, dans la carte CP1, CP2 elle-même, la signature SGST en fonction des données de politique de serveur PS et des données d'horodatage DHE.

La politique privée et particulièrement les données personnelles propres à l'usager pré-mémorisées dans la carte à puce CP1, CP2 sont ainsi portables sur n'importe quelle plate-forme dotée d'un lecteur de carte à puce additionnelle, ce qui augmente la sécurité de l'accès aux données personnelles de l'usager.

Au cours d'une session, au moins les signatures SGST et SGSE et les données d'horodatage correspondantes DHR et DHE avec l'adresse du serveur SE sont également enregistrées dans la carte à puce.

Selon une troisième variante, la station centrale UC1, UC2 de la station terminale ST1, ST2 a pré-mémorisé lesdites données de politique privée PP et les données personnelles DP, et la carte à puce CP1, CP2 contient l'algorithme ALE pour signer les données de politique de serveur reçues PS et de préférence des données d'horodatage.

Comme également montré aux figures 3 et 4, l'unité centrale UC1, UC2 de la station terminale ST1, ST2 comprend un module logiciel MD1, MD2 pour modifier des données UDP, IDP, DP de la politique privée PP par l'usager.

Selon encore une autre variante, la carte à puce est en liaison directe avec le navigateur.

## Revendications

1. Procédé de protection de données personnelles lues dans une station terminale d'usager (ST) par un serveur (SE), comprenant une transmission (E1) de données de politique de serveur (PS) depuis le serveur à la station et une comparaison (E2) des données de politique de serveur (PS) à des données de politique privée (PP) pré-mémorisées dans la station, **caractérisé par** une détermination (E5) d'une signature (SGST) des données de politique de serveur (PS) reçues dans la station (ST) et une transmission (E6) de la signature (SGST) avec des données personnelles (DP) lues dans la station depuis la station au serveur lorsque les données de politique de serveur (PS) sont compatibles avec les données de politique privée (PP).

2. Procédé conforme à la revendication 1, selon lequel la comparaison (E2), la détermination (E5) de la signature (SGST) des données de politique de serveur (PS) et la transmission (E6) des données personnelles (DP) et de la signature (SGST) sont automatiques (E41) dans la station terminale (ST), sans intervention d'usager.

3. Procédé conforme à la revendication 2, selon lequel les données de politique de serveur reçues (PS) sont converties sous la forme d'un formulaire visualisé dans la station terminale (ST) et rempli automatiquement par les données personnelles lues (DP).

4. Procédé conforme à l'une quelconque des revendications 1 à 3, selon lequel la station terminale (ST) détermine (E5) la signature (SGST) également en fonction de données d'horodatage (DHE).

5. Procédé conforme à la revendication 4, selon lequel la station terminale (ST) mémorise la signature (SGST) et de préférence les données d'horodatage (DHE).

6. Procédé conforme à l'une quelconque des revendications 1 à 5, comprenant une transmission (E1) d'une signature (SGSE) des donnés de politique de serveur (PS) avec les données de politique de serveur depuis le serveur (SE) à la station terminale (ST), et une mémorisation (E1) de cette signature (SGSE) par la station terminale, de préférence avec des données d'horodatage (DHR).

7. Procédé conforme à l'une quelconque des revendications 1 à 6, comprenant une fourniture d'un moyen (MP) dans la station terminale (ST) pour modifier les données de politique privée (PP).

8. Procédé conforme à l'une quelconque des revendications 1 à 7, selon lequel la station terminale (ST1, ST2) comprend une unité centrale (UC1, UC2) et une carte à puce (CP1, CP2) en liaison avec l'unité centrale et ayant pré-mémorisée lesdites données de politique privée (PP) et les données personnelles (DP).

9. Procédé conforme à la revendication 8, selon lequel la carte à puce (CP1, CP2) contient un algorithme (ALE) pour signer les données de politique de serveur reçues (PS) et de préférence des données d'horodatage.

10. Procédé conforme à la revendication 6 et à la revendication 8 ou 9, selon lequel la carte à puce (CP1, CP2) enregistre la signature (SGSE) des données de politique de serveur (PS) transmise par le serveur, de préférence avec des données d'horodatage.

11. Procédé conforme à l'une quelconque des revendications 1 à 7, selon lequel la station terminale (ST1, ST2) comprend une unité centrale (UC1, UC2) ayant pré-mémorisée lesdites données de politique privée (PP) et les données personnelles (DP), et une carte à puce (CP1, CP2) en liaison avec l'unité centrale et contenant un algorithme (ALE) pour signer les données de politique de serveur reçues (PS) et de préférence des données d'horodatage.

12. Procédé conforme à l'une quelconque des revendications 8 à 11, selon lequel la carte à puce (CP1, CP2) effectue elle-même la comparaison des données de politique de serveur (PS) à des données de politique privée (PP).

## Patentansprüche

1. Schutzverfahren für in einer Benutzer-Terminalstation (ST) durch einen Server (SE) gelesene persönliche Daten mit einer Datenübertragung (E1) einer Serverpolitik (PS) ab dem Server auf die Station und einem Vergleich (E2) der Serverpolitikdaten (PS) mit in der Station vorgespeicherten privaten Politikdaten (PP), **gekennzeichnet durch** eine Bestimmung (E5) einer Unterschrift (SGST) der in der Station (ST) empfangenen Serverpolitikdaten (PS) und einer Übertragung (E6) der Unterschrift (SGST) mit den in der Station gelesenen persönlichen Daten (DP) von der Station auf dem Server, wenn die Serverpolitikdaten (PS) mit den privaten Politikdaten (PP) kompatibel sind.

2. Verfahren gemäß Anspruch 1, nach dem der Vergleich (E2), die Bestimmung (E5) der Unterschrift (SGST) der Serverpolitikdaten (PS) und die Übertragung (E6) der persönlichen Daten (DP) und der Unterschrift (SGST) in der Terminalstation (ST) ohne Benutzereingriff automatisch (E41) sind.

3. Verfahren gemäß Anspruch 2, nach dem die empfangenen Serverpolitikdaten (PS) in Form eines in der Terminalstation (ST) angezeigten und automatisch durch die gelesenen persönlichen Daten (DP) ausgefüllten Formulars konvertiert werden.

4. Verfahren gemäß Anspruch 1 bis 3, nach dem die Terminalstation (ST) die Unterschrift (SGST) ebenfalls in Abhängigkeit von Tageszeitgebungsdaten (DHE) bestimmt (E5).

5. Verfahren gemäß Anspruch 4, nach dem die Terminalstation (ST) die Unterschrift (SGST) und bevorzugt die Tageszeitgebungsdaten (DHE) speichert.

6. Verfahren gemäß Anspruch 1 bis 5, mit einer Übertragung (E1) einer Unterschrift (SGSE) der Serverpolitikdaten (PS) mit den Serverpolitikdaten von dem Server (SE) auf die Terminalstation (ST) und einer Speicherung (E1) dieser Unterschrift (SGSE) durch die Terminalstation, bevorzugt mit Tageszeitgebungsdaten (DHR).

7. Verfahren gemäß Anspruch 1 bis 6, mit einer Lieferung eines Mittels (MP) in der Terminalstation (ST) zur Abänderung der privaten Politikdaten (PP).

8. Verfahren gemäß Anspruch 1 bis 7, nach dem die Terminalstation (ST1, ST2) eine mit der Zentraleinheit stehende Zentraleinheit (UC1, UC2) und eine Chipkarte (CP1, CP2), die die genannten privaten Politikdaten (PP) und die persönlichen Daten (DP) vorgespeichert hat, umfasst.

9. Verfahren gemäß Anspruch 8, nach dem die Chipkarte (CP1, CP2) einen Algorithmus (ALE) zur Unterzeichnung der empfangenen Serverpolitikdaten (PS) und bevorzugt von Tageszeitgebungsdaten enthält.

10. Verfahren gemäß Anspruch 6 und gemäß Anspruch 8 oder 9, nach dem die Chipkarte (CP1, CP2) die vom Server übertragene Unterschrift (SGSE) der Serverpolitikdaten (PS) bevorzugt mit den Tageszeitgebungsdaten speichert.

11. Verfahren gemäß Anspruch 1 bis 7, nach dem die Terminalstation (ST1, ST2) eine Zentraleinheit (UC1, UC2) umfasst, die die genannten privaten Politikdaten (PP) und die persönlichen Daten (DP) gespeichert hat, und eine mit der Zentraleinheit in Verbindung stehende und einen Algorithmus (ALE) zur Unterzeichnung der empfangenen Serverpolitikdaten (PS) und bevorzugt der Tageszeitgebungsdaten enthaltene Chipkarte (CP1, CP2).

12. Verfahren gemäß Anspruch 8 bis 11, nach dem die Chipkarte (CP1, CP2) selbst den Vergleich der Serverpolitikdaten (PS) mit den privaten Politikdaten (PP) durchführt.

## Claims

1. A method of protecting personal data read from a user terminal station (ST) by a server (SE), comprising transmission (E1) of server policy data (PS) from the server to the station and comparison (E2) of the server policy data (PS) with private policy data (PP) pre-stored in the station, **characterised by** determination (E5) of a signature (SGST) of the server policy data (PS) received in the station (ST) and transmission (E6) of the signature (SGST) with personal data (DP) read from the station from the station to the server when the server policy data (PS) are compatible with the private policy data (PP).

2. A method according to Claim 1, in which the comparison (E2), the determination (E5) of the signature (SGST) of the server policy data (PS) and the transmission (E6) of the personal data (DP) and of the signature (SGST) are automatic (E41) in the terminal station (ST), with no user intervention.

3. A method according to Claim 2, in which the received server policy data (PS) are converted into the form of a form displayed in the terminal station (ST) and filled in automatically with the read personal data (DP).

4. A method according to any one of Claims 1 to 3, in which the terminal station (ST) determines (E5) the signature (SGST) also as a function of time-stamping data (DHE).

5. A method according to Claim 4, in which the terminal station (ST) stores the signature (SGST) and preferably the time-stamping data (DHE).

6. A method according to any one of Claims 1 to 5, comprising transmission (E1) of a signature (SGSE) of the server policy data (PS) with the server policy data from the server (SE) to the terminal station (ST), and storing (E1) of this signature (SGSE) by the terminal station, preferably with time-stamping data (DHR).

7. A method according to any one of Claims 1 to 6, comprising provision of a means (MP) in the terminal station (ST) for modifying the private policy data (PP).

8. A method according to any one of Claims 1 to 7, in which the terminal station (ST1, ST2) comprises a central unit (UC1, UC2) and a smart card (CP1, CP2) interconnected with the central unit and having pre-stored said private policy data (PP) and the personal data (DP).

9. A method according to Claim 8, in which the smart card (CP1, CP2) contains an algorithm (ALE) for signing the received server policy data (PS) and preferably time-stamping data.

10. A method according to Claim 6 and Claim 8 or 9, in which the smart card (CP1, CP2) records the signature (SGSE) of the server policy data (PS) transmitted by the server, preferably with time-stamping data.

11. A method according to any one of Claims 1 to 7, in which the terminal station (ST1, ST2) comprises a central unit (UC1, UC2) having pre-stored said private policy data (PP) and the personal data (DP), and a smart card (CP1, CP2) interconnected with the central unit and containing an algorithm (ALE) for signing the received server policy data (PS) and preferably time-stamping data.

12. A method according to any one of Claims 8 to 11, in which the smart card (CP1, CP2) itself performs the comparison of the server policy data (PS) with private policy data (PP).
